# EUROPÄISCHE PATENTSCHRIFT

(11) **EP 1 012 004 B1**
(45) Veröffentlichungstag und Bekanntmachung des Hinweises auf die Patenterteilung: **27.02.2002**
(21) Anmeldenummer: 98951214.0
(22) Anmeldetag: 25.08.1998
(51) Int. Cl.: B60R 21/00

(54) **EINRICHTUNG FÜR DEN INSASSENSCHUTZ IN EINEM KRAFTFAHRZEUG**
DEVICE FOR PROTECTING THE PASSENGERS IN A MOTOR VEHICLE
DISPOSITIF POUR LA PROTECTION DES OCCUPANTS D'UN VEHICULE AUTOMOBILE

(30) Priorität: 11.09.1997 DE 19740019
(43) Veröffentlichungstag der Anmeldung: 28.06.2000
(73) Patentinhaber: SIEMENS AKTIENGESELLSCHAFT, 80333 München (DE)
(72) Erfinder: BLANK, Thomas, D-76185 Karlsruhe (DE); LEIRICH, Oskar, D-93073 Neutraubling (DE); GARCIA, Emmanuel, Sterling Hights, MI 48310 (US); HEISER, Markus, D-63755 Alzenau (DE)
(86) Internationale Anmeldenummer: DE9802498
(87) Internationale Veröffentlichungsnummer: WO9912773

(56) Entgegenhaltungen:
- WO-A-96/09942
- DE-A- 3 811 217
- DE-A- 19 519 130
- DE-C- 19 625 401

## Beschreibung

Die Erfindung betrifft eine Einrichtung für den Insassenschutz in einem Kraftfahrzeug.

Eine bekannte Einrichtung (WO 96/09942 A) weist einen in einem vorderen Bereich des Kraftfahrzeugs angeordneten Aufprallsensor und eine in einem zentralen Bereich des Kraftfahrzeugs angeordnete Steuereinheit zum Steuern eines Insassenschutzmittels auf. Der Aufprallsensor weist entweder mehrere, für unterschiedliche Beschleunigungen empfindliche mechanische Beschleunigungsschalter auf, die bei Überschreiten einer festgelegten Beschleunigung ein Schaltsignal liefern. Alternativ ist als Aufprallsensor ein ein analoges Beschleunigungssignal liefernder Beschleunigungssensor vorgesehen. Die Schaltsignale bzw. das analoge Beschleunigungssignal werden an die zentrale Steuereinheit geliefert. Das Insassenschutzmittel wird durch die Steuereinheit ausgelöst, wenn das in einem Prozessor der Steuereinheit ausgewertete Signal eines bei der Steuereinheit zentral angeordneten Beschleunigungssensors einen vorgegebenen Verlauf aufweist. Einzelne Betriebszustände des Insassenschutzmittels wie z. B. einzelne Stufen eines Airbags werden daraufhin abhängig von dem Signal des Aufprallsensors ausgewählt.

Bei Verwendung eines elektronischen Beschleunigungssensors als Aufprallsensor können auf die Leitung zwischen Aufprallsenor und Steuereinheit einwirkende Störgrößen das von dem Aufprallsensor gelieferte empfindliche analoge Signal erheblich verfälschen. Zum anderen ist eine äußerst große Rechenleistung im Prozessor der Steuereinheit bereitzustellen, um das analoge Signal auszuwerten.

Darüber hinaus muß der Prozessor eine große Anzahl weiterer rechenintensiven Aufgaben bewältigen, wie z. B. eine Auswertung von Signalen zentral angeordneter Beschleunigungssensoren oder aber auch eine Auswertung von Signalen sonstiger an die Steuereinheit angeschlossener Einrichtungen wie z. B. einer Einrichtung zur Insassen- und/oder Kindersitzerkennung. Bei Verwendung von mechanischen Beschleunigungsschaltern als Aufprallsensor ist zwar ein größerer Signal- Rauschabstand bei der Schaltsignalübermittlung gegeben. Jedoch sind solche Beschleunigungsschalter aufwendig und kostenintensiv herzustellende Bauteile und lassen insbesondere eine genaue zeitliche Bewertung der auf den vorderen Fahrzeugbereich einwirkenden Beschleunigung nicht zu.

Die DE 38 11 217 A1, die dem Gegenstand der vorliegenden Erfindung am nächsten kommt, zeigt und beschreibt eine elektronische Einrichtung für den Insassenschutz in einem Kraftfahrzeug mit einer Vielzahl von Sensoren, die jeweils über eine Auswerteschaltung und eine Schnittstelle mit einer sternförmig verlaufenden Leitung mit einem zentralen Steuergerät verbunden sind. Die mittels der Sensoren erfaßten Signale werden hierbei bereits in den Auswertschaltungen aufbereitet und über die Schnittstellen an das zentrale Steuergerät übermittelt. Die zentrale Steuereinheit weist einen weiteren Sensor auf, dessen Signale sie zusammen mit den übermittelten Signalen auswertet und in Abhängigkeit davon Rückhaltemittel ansteuert, die über Schnittstellen über eine weitere Leitung mit der zentralen Steuereinheit verbunden sind.

Aufgabe der Erfindung ist es, eine Einrichtung für den Insassenschutz in einem Kraftfahrzeug zu schaffen, die trotz geringen Aufwands dennoch eine hochaufgelöste Bewertung des Unfallgeschehens bereitstellen kann.

Die Aufgabe wird gelöst durch die Merkmale des Anspruchs 1.

Dem im Frontbereich des Kraftfahrzeugs angeordneten Aufprallsensor ist ein Auswerter - vorzugsweise in Form eines Mikroprozessors mit zugehörigen Speichern oder in Form einer integrierten Schaltungsanordnung - sowie eine Schnittstelle zugeordnet. Aufprallsensor, zugeordneter Auswerter - im folgenden ausgelagerter Auswerter genannt - und Schnittstelle bilden eine Aufprallsensoreinheit, die vorzugsweise als elektrisches Steuergerät in einem Gehäuse angeordnet ist. Der ausgelagerte Auswerter ist für das von dem Aufprallsensor gelieferte Aufprallsensorsignal vorgesehen. In Abhängigkeit von der Auswertung des Aufprallsensorsignals wird von der Aufprallsensoreinheit ein Codesignal über die Schnittstelle an die zentrale Steuereinheit geliefert. In der zentralen Steuereinheit ist eine Schnittstelle zum Empfangen des Codesignals vorgesehen. Ferner weist die zentrale Steuereinheit einen Beschleunigungssensor und einen Auswerter für ein von dem Beschleunigungssensor geliefertes Beschleunigungssignal auf. Das der Einrichtung zugeordnete Insassenschutzmittel wird von dem Auswerter der Steuereinheit - im folgenden zentraler Auswerter genannt -, der vorzugsweise als Mikroprozessor mit zugehörigen Speichern ausgebildet ist, in Abhängigkeit des ausgewerteten Beschleunigungssignals und des Codesignals gesteuert. Beschleunigungssensor und Aufprallsensor sind dabei insbesondere zum Erkennen eines Frontaufpralls ausgerichtet.

Die erfindungsgemäße Einrichtung hat den Vorteil, daß die zentrale Steuereinheit keine übermäßige Rechenleistung zur Verfügung stellen muß. Dies hat insbesondere den Vorteil, daß bei Erweiterung von bestehenden zentralen Steuereinheiten ohne einen ausgelagerten Aufprallsensor um eben diesen Aufprallsensor lediglich die Software der bisherigen zentralen Steuereinheit, nicht aber deren Hardware geändert werden muß. Die zentrale Steuereinheit wird nicht von analogen Signalen überflutet, die vor ihrer weiteren Bearbeitung erst diskretisiert werden müssen. Die ausgelagerte Aufprallsensoreinheit leitet nur ausgewählte Codesignale mit einem relativ geringen Durchsatz an die zentrale Steuereinheit. Zum anderen muß jedoch trotz relativ gering dimensionierter Rechenleistung der zentralen Steuereinheit nicht auf die Verwendung eines ausgelagerten elektronischen Beschleunigungssensors und seine Information im analogen Aufprallsignal verzichtet werden.

Mit der erfindungsgemäßen Einrichtung kann in Aufprall äußerst frühzeitig erkannt werden. Der Aufprallsensor liefert hier bereits zu einem Zeitpunkt ein signifikantes Aufprallsensorsignal, zu dem beispielsweise der zentral angeordnete Beschleunigungssensor noch keinen Aufprall registriert. Eine Abschätzung des weiteren Unfallverlaufes und damit der auf den Insassen wirkenden Kräfte wie auch seine Vorverlagerung wird zu einem frühen Zeitpunkt ermöglicht, sodaß eine angepaßte Airbag-Auslösung ermöglicht wird.

Gemäß vorteilhafter Weiterbildungen der Erfindung in den Ansprüchen 2 bis 5 übernimmt der ausgelagerte Auswerter zumindest die Diskretisierung bzw. die Analog-Digital-Wandlung des analogen Aufprallsensorsignals. Dabei kann vorzugsweise die Auflösung des Wandlers größer sieben Bit gewählt sein, wobei etwa in Zeitabständen zwischen 0,01 und einer Millisekunde digitale Codesignale mit diskretisierten Werten übermittelt werden. Vorzugsweise wird jedoch das gemessene Aufprallsensorsignal auch dahingehend verarbeitet, daß es gefiltert und/oder integriert wird. Ein solches Aufprallsignal kann auch auf andere Art und Weise aus dem aufgenommenen Aufprallsensorsignal abgeleitet werden, beispielsweise durch Mittelwertbildung über kurze Zeitintervalle, über das Einbeziehen von Vergangenheitswerten des Aufprallsensorsignals oder ähnlichem. Auf diese Art und Weise wird ein Aufprallsignal ermittelt, das möglichst frei ist von Störeinflüssen und möglichst aussagekräftig hinsichtlich des Aufprallgeschehens im vorderen Fahrzeugbereich. Dabei kann das Ableiten des Aufprallsignals aus dem Aufprallsensorsignal zeitlich vor der Analog-Digital-Wandlung erfolgen oder auch zeitlich nach der Analog-Digital-Wandlung. Durch diese Maßnahmen erhält die zentrale Steuereinheit die wichtigsten Informationen in komprimierter Form, ohne daß ihre Rechenkapazität überlastet würde.

Eine zeitliche Auswertung des Aufprallsensorsignals erfolgt durch den ausgelagerten Auswerter. Dabei liefert der ausgelagerte Auswerter vorzugsweise Codesignale über die Schnittstelle an die zentrale Steuereinheit die etwa folgende Nachricht zum Inhalt haben: Der im vorderen Kraftfahrzeugbereich infolge eines Aufpralls festgestellte Geschwindigkeitsablauf ist gering, seine Höchstwerte werden zudem in einem relativ großen Zeitintervall erreicht.

Die zusätzliche Auswertung des zeitlichen Verlaufs des Aufprallsensorsignals und der Einfluß der damit gewonnen Information in die an die zentrale Steuereinheit übermittelten Codesignale verringert zudem die Rechenbelastung der zentralen Steuereinheit durch die Aufprallsensoreinheit.

Weitere vorteilhafte Weiterbildungen der Erfindung sind in den übrigen Ansprüchen gekennzeichnet.

Ausführungsbeispiele der Erfindung und ihrer Weiterbildungen werden im folgenden anhand der Zeichnung näher erläutert. Es zeigen:
- Figur 1: die räumliche Anordnung der erfindungsgemäßen Einrichtung in einem Kraftfahrzeug,
- Figur 2: ein Blockschaltbild einer Aufprallsensoreinheit,
- Figur 3: ein Blockschaltbild einer zentralen Steuereinheit,
- Figur 4: ein analoges Aufprallsignal über der Zeit und seine zur bestimmten Abtastzeitpunkten diskretisierten Werte,
- Figur 5: eine Auslösematrix für ein mehrstufiges Insassenschutzmittel in Abhängigkeit der von der Aufprallsensoreinheit übermittelten Codesignale und der Auswertung des zentralen Beschleunigungssignals.

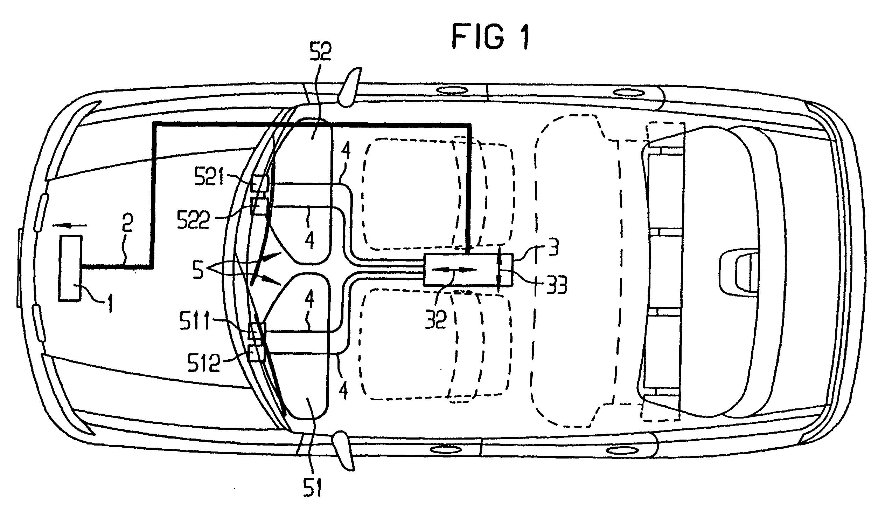

Figur 1 zeigt die räumliche Anordnung der erfindungsgemäßen Einrichtung in einem symbolisch gezeichneten Kraftfahrzeug. In zentraler Position im Fahrzeug, beispielhaft am Fahrzeugtunnel angebracht, ist eine zentrale Steuereinheit 3. Durch Doppelpfeile symbolisch gekennzeichnet sind Empfindlichkeitsachsen von zentral angeordneten Beschleunigungssensoren 32 und 33. Die Steuereinheit 3 weist dabei einen Beschleunigungssensor 32 für Fahrzeuglängsbeschleunigungen und einen Beschleunigungssensor 33 für Fahrzeugquerbeschleunigungen auf. Über eine Datenleitung 2 ist eine ausgelagerte, im vorderen Bereich des Kraftfahrzeugs angeordnete Aufprallsensoreinheit 1 elektrisch mit der Steuereinheit 3 verbunden. Ferner ist die Steuereinheit 3 über Zündleitungen 4 mit Zündelementen 511 und 512 für eine erste und eine zweite Aufblasstufe eines Fahrerairbags 51 sowie mit Zündelementen 521 und 522 für eine erste und eine zweite Aufblasstufe eines Beifahrerairbags 52 als Insassenschutzmittel 5 verbunden.

Der Einfachpfeil neben der Aufprallsensoreinheit 1 deutet an, daß die Aufprallsensoreinheit 1 einen Aufprallsensor, insbesondere einen Beschleunigungssensor ausweist, der empfindlich für Beschleunigungen in der durch den Pfeil angedeuteten Fahrzeugrichtung ist, also für Fahrzeuglängsverzögerungen wie sie bei einem Front- oder Schrägaufprall auf den forderen Bereich des Fahrzeugs einwirken.

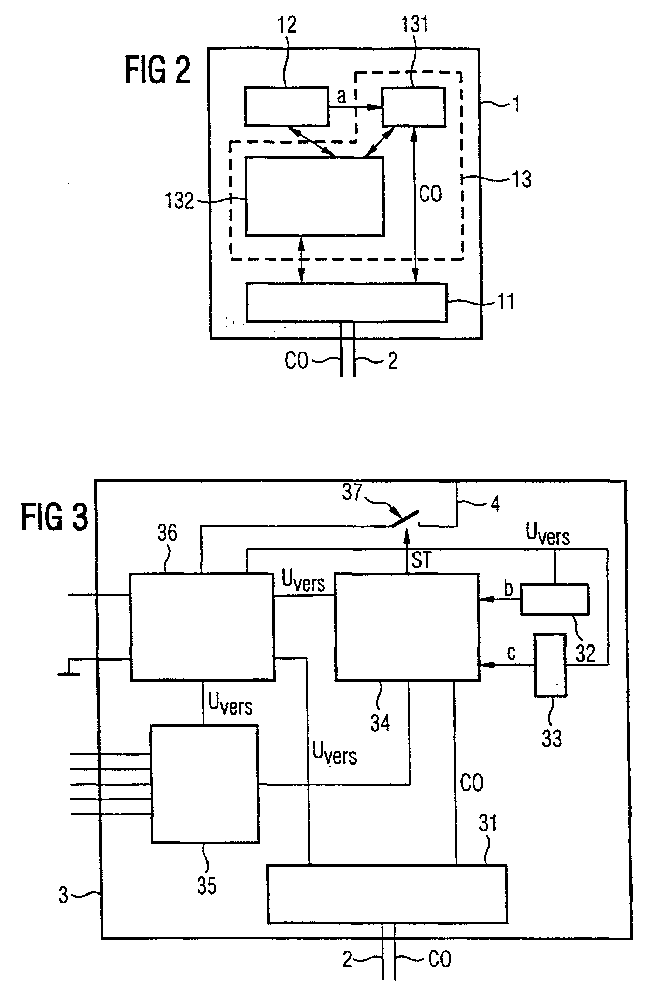

Figur 2 zeigt eine erfindungsgemäße Aufprallsensoreinheit 1 mit einem Aufprallsensor 12, einem Auswerter 13 enthaltend einen Mikroprozessor 131 und eine als Logikeinheit aufgebaute Diagnoseeinheit 132 sowie eine Schnittstelle 11. Der als elektronischer Beschleunigungssensor ausgebildete Aufprallsensor 12 zur Aufnahme von Fahrzeugverzögerungen liefert sein Aufprallsensorsignal a an den Mikroprozessor 131, der das Aufprallsensorsignal a mit einem relativ hohen Auflösungsvermögen analog-digital-wandelt, integriert und das derart gebildete Aufprallsignal vorzugsweise mit mehreren Schwellwerten vergleicht. Übersteigt das Aufprallsignal einen der Schwellwerte wird ein entsprechendes Codesignal co über die Schnittstelle 11 abgesetzt.

Alternativ kann aus dem Aufprallsensorsignal a z.B. durch Verstärkung und Filterung oder Integration in einer analogen Schaltungsanordnung ein Aufprallsignal gewonnen werden, das erst anschließend analog-digital-gewandelt wird. Wird das analog-digital-gewandelte Aufprallsignal direkt über die Schnittstelle übertragen, so empfiehlt sich ein Analog-Digital-Wandler mit geringem Auflösungsvermögen.

Anstelle des vorbeschriebenen Mikroprozessors oder der vorbeschriebenen analogen Schaltungsanordnung kann der ausgelagerte Auswerter 131 als Ein-Chip-Lösung zusammen mit dem Aufprallsensor 12 integriert sein.

Es kann jedoch nicht nur dann ein Codesignal co über die Schnittstelle 11 abgesetzt werden, wenn das Aufprallsensorsignal oder das Aufprallsignal einen vorgegebenen Schwellwert übersteigt. Vorzugsweise wird die Dynamik, also der zeitliche Verlauf des Aufprallsensorsignals oder des Aufprallsignals für das Erzeugen eines Codesignals co berücksichtigt. Vorzugsweise wird in Abhängigkeit von einer Zeitspanne, innerhalb der ein festgelegter Schwellwert durch das Aufprallsignal überschritten wird, eine entsprechende Nachricht als Codesignal co über die Schnittstelle 11 und die an die Schnittstelle 11 angeschlossene Datenleitung 2 an die zentrale Steuereinheit 3 ausgesendet. Dabei wird vorzugsweise ein zurückliegendes Zeitintervall, also insbesondere ein Zeitfenster konstanter Länge, das mit fortschreitender Zeit mitwandert, auf die Dynamik des Aufprallsensorsignals oder des Aufprallsignals überprüft. Beispielsweise wird ein erstes Codesignal erzeugt, wenn innerhalb des Zeitfensters ein erster Wertebereich durch das Aufprallsignal durchschritten wurde, ein zweites Codesignal hingegen, wenn innerhalb des Zeitfensters ein zweiter größerer Wertebereich durchschritten wurde.

Die Schnittstelle 11 definiert dabei die physikalischen und funktionalen Voraussetzungen zur gesteuerten Datenübermittlung zwischen Aufprallsensoreinheit 1 und Steuereinheit 3. Die Steuereinheit 3 gemäß Figur 3 empfängt das solches Codesignal co von der Datenleitung 2 über eine Schnittstelle 31 und leitet zumindest die im Codesignal co enthaltene Information an einen Auswerter 34 weiter. Der Auswerter 34 nimmt zudem Beschleunigungssignale b und c eines Längsbeschleunigungssensors 32 bzw. eines Querbeschleunigungssensors 33 auf. Weiterhin empfängt der Auswerter 34 Signale einer weiteren Schnittstelle 35, an die vorzugsweise Einrichtungen zur Kindersitz- und/oder Insassen- und/oder Gewichtserkennung angeschlossen sind. Der zentrale Auswerter 34 wertet die empfangenen Signale aus, z.B. bildet er einen Gesamt-Geschwindigkeitsabbau durch Differenzbildung zwischen dem ausgelagert ermittelten Geschwindigkeitsabbau und dem zentral ermittelten Geschwindigkeitsabbau, und zündet ein über eine Zündleitung 4 angeschlossenes, nicht eingezeichnetes Zündelement eines Insassenschutzmittels durch Leitendschalten einer steuerbaren Endstufe 37 mittels eines Steuersignals ST, wenn beispielsweise der Gesamt-Geschwindigkeitsabbau einen Schwellwert überschreitet. Durch das Durchsteuern der Endstufe 37 wird das angeschlossene Zündelement mit Energie aus einer Engergiequelle 36 beaufschlagt und löst damit ein dem Zündelement zugeordnetes Insassenschutzmittel zumindest teilweise aus. Die Diagnoseeinheit 132 überprüft mit geeigneten Diagnoseroutinen/Messungen die Funktionsfähigkeit des Aufprallsensors 12, der Algorhithmuseinheit 131 und der Schnittstelle 11.

Wird festgestellt, daß die Aufprallsensoreinheit 1 defekt ist, wird vorzugsweise auf einen weiteren Betriebsmodus der erfindungsgemäßen Einrichtung umgestellt, bei dem das zugeordnete Insassenschutzmittel durch den zentralen Auswerter beruhend alleine auf der Auswertung des Beschleunigungs-Signals des zentralen Beschleunigungssensors ausgelöst werden kann.

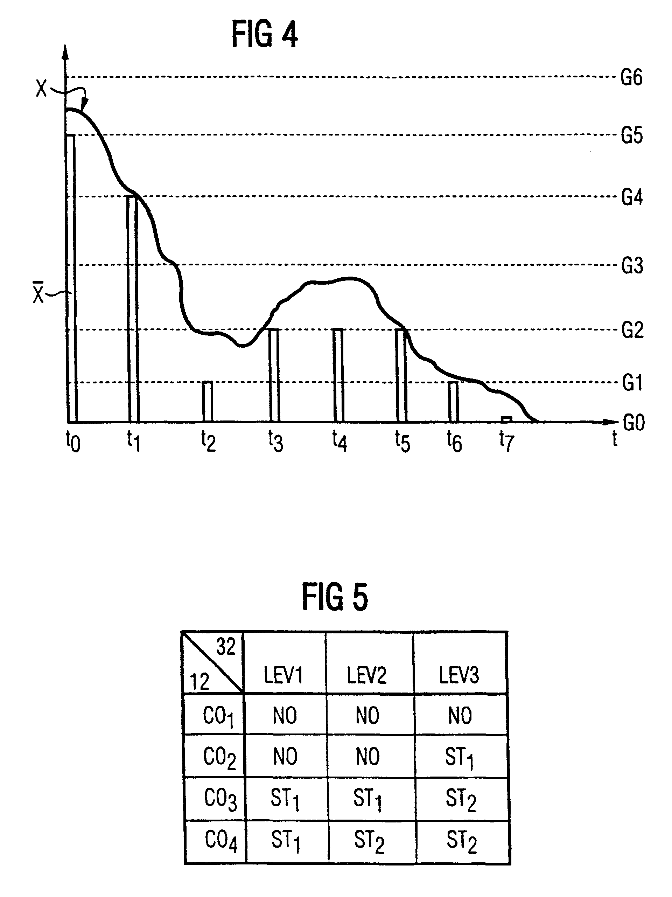

Figur 4 zeigt beispielsweise ein im Zusammenhang mit Figur 3 beschriebenes Aufprallsignal X über der Zeit t, wobei das Aufprallsignal X nicht nur ein integriertes Aufprallsensorsignal darstellt, sondern als Maß für den aus dem Aufprallsensorsignal ermittelten Geschwindigkeitsabbau der vorderen Fahrzeugkarosserie steht. Infolge des Aufpralls ist der Geschwindigkeitsabbau zu frühen Zeitpunkten größer als zu späten Zeitpunkten. Die eingezeichneten Balken repräsentieren das im ausgelagerten Auswerter 13 analog-digital-gewandelte Aufprallsignal X. Die Zeitpunkte t₀ bis t₇ kennzeichnen Abtastzeitpunkte. Die Grenzwerte G₀ bis G₆ kennzeichnen einzelne Diskretisierungsstufen, wobei jeweils überprüft wird, ob das analoge Aufprallsignal X eines bestimmte Diskretisierungsstufe Gᵢ überschritten hat. Anhand des diskretisierten Aufprallsignals *x* wird im folgenden die Schwere und der zeitliche Verlauf des erkannten Aufpralls durch den ausgelagerten Auswerter bewertet. Aufgrund dieser Rückschlüsse werden festgelegte Codesignale an die zentrale Steuereinheit übermittelt.

Figur 5 zeigt eine Auslösestrategie, die in dem zentralen Auswerter als Soft- oder Hardware abgelegt ist, und die abhängig von dem gemessenen Aufprallsensorsignal des ausgelagerten Aufprallsensors und dem Beschleunigungssignal des zentralen Beschleunigungssensors Auslöseentscheidungen für einzelne Stufen eines Insassenschutzmittels trifft.

Waagrecht aufgetragen ist dabei die durch den zentralen Auswerter vollzogene Bewertung des von dem zentralen Beschleunigungssensor gelieferten Beschleunigungssignals. Aus dem Beschleunigungssignal des zentralen Beschleunigungssensors 32 wird nach seiner Analog-Digital-Wandlung ein zentrales Aufprallsignal für den Geschwindigkeitsabbau der Fahrgastzelle abgeleitet. Dieser Geschwindigkeitsabbau als relevantes zentrales Aufprallsignal wird im folgenden mit unterschiedlichen Schwellwerten verglichen, wobei jeder Schwellwert variabel und insbesondere aufprallabhängig oder aber konstant ausgebildet sein kann. Überschreitet das zentrale Aufprallsignal einen ersten geringen Schwellwert, so wird die Variable LEV1 gesetzt, übersteigt das zentrale Aufprallsignal einen weiteren Schwellwert, der größer ist als der erste Schwellwert, so wird die Variable LEV2 gesetzt, übersteigt das zentrale Aufprallsignal einen dritten, sehr hohen Schwellwert, so wird die Variable LEV3 gesetzt.

Für die Bewertung eines Aufpralls durch die Aufprallsensoreinheit sind 4 Nachrichten in Form von Codesignalen col bis co4 vorgesehen. Dabei steht das Signal col dafür, daß ausgelagert ein schwacher Geschwindigkeitsabbau festgestellt wurde, der zudem nur langsam erreicht wurde, das Codesignal co2 für einen mittel eingestuften Geschwindigkeitsaufbau, der relativ langsam erreicht wurde, das Codesignal co3 für einen hohen Geschwindigkeitsabbau, der in einem mittelmäßig lange andauernden Zeitintervall erreicht wurde, und das Codesignal co4 für einen hohen Geschwindigkeitsabbau der in sehr kurzer Zeit erreicht wurde. Mit derart gebildeten Codesignalen co wird in der Aufprallsensoreinheit nicht nur die Stärke eines Aufpralls sondern auch seine Dynamik ausgewertet.

Die Matrix gemäß Figur 5 trifft Aussagen darüber, unter welchen Bedingungen und wenn ja welche Stufe des zugeordneten Insassenschutzmittels ausgelöst werden soll. Das Insassenschutzmittel ist zweistufig ausgebildet. Seine erste Stufe, die ein lediglich kleines Volumen des Airbags oder den Airbag mit einem geringen Gasdruck füllt, wird mit einem Steuersignal ST1 aktiviert, seine zweite Stufe, die über die erste Stufe hinaus ein größeres Airbagvolumen aktiviert und gewöhnlich aggressiver aufgeblasen wird, wird mit dem Steuersignal ST2 aktiviert. Ist aufgrund der Auswertung ein Auslösen keiner Stufe erforderlich, so findet sich in der Matrix gemäß Figur 5 ein Eintrag NO.

Die Interpretation der Matrix gemäß Figur 5 soll nur anhand weniger Beispiele dargestellt werden: Stellt beispielsweise die Aufprallsensoreinheit einen starken, schnellen Aufprall fest (co4), die zentrale Steuereinheit dagegen lediglich einen schwachen Aufprall (LEV1), so lassen diese Aussagen darauf schließen, daß das Fahrzeug beispielsweise unter einen Lkw geraten ist, wobei bereits die vordere Karosserie insbesondere mittig verformt wird, die Längsträger des Fahrzeugs, die den Aufprall jedoch auf die zentrale Steuereinheit übertragen, bislang nicht getroffen wurden. Die Verformung wird jedoch als so schwerwiegend bewertet, daß der Airbag auf seine erste Stufe ausgelöst werden soll (ST1), insbesondere vor dem Hintergrund, daß in absehbarer Zeit ein starker Engergieabbau auch über die Fahrzeuglängsträger erfolgen wird. Zeigt andererseits die Aufprallsensoreinheit beispielsweise einen schwachen Geschwindigkeitsabbau, der nur langsam erreicht wird (co1)und stellt die zentrale Steuereinheit einen erheblichen Geschwindigkeitsabbau fest (LEV3), so wird nicht ausgelöst (NO). Es ist davon auszugehen, daß bei keiner oder nur geringer ausgelagerter Verzögerung und starker zentraler Verzögerung lediglich ein Aufsetzen des Fahrzeugs auf den Boden, verursacht beispielsweise durch das Durchfahren eines Schlaglochs, vorliegt, bei dem ein Auslösen von Schutzmitteln nicht erforderlich ist.

## Patentansprüche

1. Einrichtung für den Insassenschutz in einem Kraftfahrzeug,
- mit einer in einem vorderen Bereich des Kraftfahrzeugs angeordneten Aufprallsensoreinheit (1),
- die einen Auswerter (13) für ein von einem Aufprallsensor (12) geliefertes Aufprallsensorsignal (a) aufweist, und
- die eine Schnittstelle (11) zum Aussenden eines Codesignales (co) auf eine Datenleitung (2) aufweist, wobei das Codesignal (co) in Abhängigkeit des ausgewerteten Aufprallsensorsignals (a) erzeugt und ausgegeben wird, wenn durch den Auswerter (13) der Aufprallsensoreinheit (1) festgestellt wird, daß das Aufprallsensorsignal (a) oder ein aus dem Aufprallsensorsignal (a) abgeleitetes Aufprallsignal einen festgelegten Wert innerhalb einer festgelegten Zeitspanne erreicht,
- mit einer in einem zentralen Bereich des Kraftfahrzeugs angeordneten Steuereinheit (3) zum Steuern eines Insassenschutzmittels,
- die über die Datenleitung (2) mit der Aufprallsensoreinheit (1) verbunden ist,
- die eine Schnittstelle (31) zum Empfangen des Codesignales (co) aufweist,
- die einen Beschleunigungssensor (32) und einen Auswerter (34) für ein von dem Beschleunigungssensor (32) geliefertes Beschleunigungssignal (b) aufweist,
- bei der der Auswerter (34) der Steuereinheit (3) in Abhängigkeit des ausgewerteten Beschleunigungssignals (a) und des Codesignals (co) das Insassenschutzmittel steuert.

2. Einrichtung nach Anspruch 1, bei der das analoge Aufprallsensorsignal (a) oder ein aus dem analogen Aufprallsensorsignal (a) abgeleitetes Aufprallsignal in dem Auswerter (13) der Aufprallsensoreinheit (1) analog-digital-gewandelt wird.

3. Einrichtung nach Anspruch 2, bei der das Aufprallsignal zumindest durch Filterung oder Integration aus dem Aufprallsensorsignal (a) abgeleitet wird.

4. Einrichtung nach Anspruch 2, bei der das Codesignal (co) abhängig ist von dem digitalen Aufprallsignal am Ausgang des Analog-Digital-Wandlers.

5. Einrichtung nach Anspruch 4, bei der der Analog-Digital-Wandler ein Auflösungsvermögen größer 7 bit und eine Abtastrate größer 1 Kilohertz aufweist.

6. Einrichtung nach einem der vorhergehenden Ansprüche, bei der ein von der Aufprallsensoreinheit (1) ausgesendetes Codesignal (co) wiederholt ausgesendet wird.

7. Einrichtung nach einem der vorhergehenden Ansprüche, bei der das Insassenschutzmittel mehrere in Stufen oder kontinuierlich steuerbare Betriebszustände aufweist, und bei der der Auswerter (34) der Steuereinheit (3) in Abhängigkeit des ausgewerteten Beschleunigungssignals (a) und des Codesignals (co) den Betriebszustand des Insassenschutzmittels auswählt und ein Auslösen des Insassenschutzmittels in den ausgewählten Betriebszustand veranlaßt.

## Claims

1. Device for protection of occupants in a motor vehicle, with an impact sensor unit (1) located in a front area of the vehicle,
- which has a signal processor (13) for an impact sensor signal (a) delivered by an impact sensor (12),
and
- which has an interface (11) for transmitting a code signal (CO) to a data line (2), where the code signal (CO) is generated and emitted depending upon the evaluated impact sensor signal (a) when it is determined by the signal processor (13) of the impact sensor unit (1) that the impact sensor signal (a), or an impact signal derived from the impact sensor signal (a), reaches a defined value within a defined time span,
with a control unit (3) positioned in a central area of the motor vehicle to control an occupant protection device,
- which is connected to the impact sensor unit (1) via the data line (2),
- which has an interface (31) for receiving the code signal (CO),
- which has an acceleration sensor (32) and a signal processor (34) for an acceleration signal (b) delivered by the acceleration sensor (32),
where the signal processor (34) of the control unit (3) controls the occupant protection device according to the evaluated acceleration signal (a) and the code signal (CO).

2. Device in accordance with Claim 1, in which the analogue impact sensor signal (a), or an impact signal derived from the analogue impact sensor signal (a), is converted from analogue to digital in the signal processor (13) of the impact sensor unit (1).

3. Device in accordance with Claim 2, in which the impact signal is derived at least by filtering or integration from the impact sensor signal (a).

4. Device in accordance with Claim 2, in which the code signal (CO) is dependent on the digital impact signal at the output of the analogue-digital converter.

5. Device in accordance with Claim 4, in which the analogue-digital converter has a resolution greater than 7 bits and a sampling rate greater than 1 kilohertz.

6. Device in accordance with one of the preceding claims, where a code signal (CO) transmitted by the impact sensor unit (1) is repeatedly transmitted.

7. Device in accordance with one of the preceding claims, where the occupant protection device has several operating states which can be controlled in stages or continuously, and where the signal processor (34) of the control unit (3) selects the operating state of the occupant protection device depending on the evaluated acceleration signal (a) and the code signal (CO) and causes the occupant protection device to be triggered in the selected operating state.

## Revendications

1. Dispositif pour la protection des occupants dans un véhicule automobile,
- comprenant une unité capteur de collision (1) agencée dans une zone avant du véhicule automobile,
- qui présente un analyseur (13) pour un signal de capteur de collision (a) émis par un capteur de collision (12) et
- qui présente une interface (11) destinée à transmettre un signal de code (co) sur une ligne de données (2), le signal de code (co) étant produit en fonction du signal de capteur de collision (a) analysé et étant émis lorsque l'analyseur (13) de l'unité capteur de collision (1) constate que le signal du capteur de collision (a) ou un signal de collision dérivé du signal du capteur de collision (a) a atteint une valeur fixée dans un intervalle de temps fixé,
- comprenant une unité de commande (3) agencée dans une zone centrale du véhicule automobile, destinée à commander un moyen de protection des occupants,
- qui est connectée à l'unité capteur de collision (1) par l'intermédiaire de la ligne de données (2),
- qui présente une interface (31) destinée à recevoir le signal de code (co),
- qui présente un capteur d'accélération (32) et un analyseur (34) pour un signal d'accélération (b) émis par le capteur d'accélération (32),
- dans lequel l'analyseur (34) de l'unité de commande (3) commande le moyen de protection des occupants en fonction du signal d'accélération (a) analysé et le signal de code (co) .

2. Dispositif selon la revendication 1, dans lequel le signal de capteur de collision analogique (a), ou un signal de collision dérivé du signal de capteur de collision analogique (a), est converti d'analogique en numérique dans l'analyseur (13) de l'unité capteur de collision (1).

3. Dispositif selon la revendication 2, dans lequel le signal de collision est dérivé du signal de capteur de collision (a), au moins par filtrage et intégration.

4. Dispositif selon la revendication 2, dans lequel le signal de code (co) est fonction du signal de collision numérique à la sortie du convertisseur analogique-numérique.

5. Dispositif selon la revendication 4, dans lequel le convertisseur analogique-numérique possède un pouvoir de résolution supérieur à sept bits et une vitesse de détection supérieure à 1 kilohertz.

6. Dispositif selon l'une des revendications précédentes, dans lequel un signal de code (co) émis par l'unité capteur de collision (1) est émis répétitivement.

7. Dispositif selon l'une des revendications précédentes, dans lequel le moyen de protection des occupants présente plusieurs états de fonctionnement qui peuvent être commandés par paliers ou de façon continue, et dans lequel l'analyseur (34) de l'unité de commande (3) sélectionne l'état de fonctionnement du moyen de protection des occupants en fonction du signal d'accélération (a) analysé et du signal de code (co), et provoque un déclenchement du moyen de protection des occupants dans l'état de fonctionnement sélectionné.
